# EUROPÄISCHE PATENTSCHRIFT

(11) **EP 0 445 845 B1**
(45) Veröffentlichungstag und Bekanntmachung des Hinweises auf die Patenterteilung: **29.01.1997**
(21) Anmeldenummer: 91106253.7
(22) Anmeldetag: 03.06.1987
(51) Int. Cl.: B60K 1/02, H02K 7/14, H02K 7/116

(54) **Kraftfahrzeug-Elektroantrieb**
Electric drive for motor vehicles
Entraînement électrique pour véhicules automobiles

(30) Priorität: 18.06.1986 DE 3620337
(43) Veröffentlichungstag der Anmeldung: 11.09.1991
(62) Teilanmeldung aus: 87108033.9
(73) Patentinhaber: Magnet-Motor Gesellschaft für magnetmotorische Technik mbH, D-82319 Starnberg (DE)
(72) Erfinder: Heidelberg, Götz, Dipl.-Phys., D-8136 Percha (DE)
(74) Vertreter: Klunker . Schmitt-Nilson . Hirsch

(56) Entgegenhaltungen:
- EP-A- 0 006 669
- DE-A- 1 430 322
- DE-A- 3 231 960
- FR-A- 553 009
- FR-A- 714 666
- FR-A- 1 541 369
- FR-A- 2 176 010

## Beschreibung

Die Erfindung bezieht sich auf einen Kraftfahrzeug-Elektroantrieb gemäß dem Oberbegriff des Anspruchs 1. Ein solcher Antrieb ist z.B. aus dem Dokument DE-A-3 231 960 schon bekannt.

Elektrische Kraftfahrzeugantriebe sind an sich seit langer Zeit bekannt, ohne daß sich jedoch bislang eine größere praktische Verbreitung ergeben hätte.

Der Erfindung liegt die Aufgabe zugrunde, eine praxisnahe, kompakte Konfiguration für einen Kraftfahrzeug-Elektroantrieb verfügbar zu machen.

Zur Lösung dieser Aufgabe ist der Kraftfahrzeug-Elektroantrieb durch eine Motoren-Baueinheit gekennzeichnet durch die kennzeichnenden Merkmale des Anspruchs 1.

Die Motoren-Baueinheit kann dadurch gebildet sein, daß zwei Elektromotoren durch axiales Befestigen aneinander vereinigt sind. Es ist möglich, die Konstruktion so auszuführen, daß je nach den räumlichen Erfordernissen wahlweise entweder die Motoren-Baueinheit oder räumlich voneinander getrennt die einzelnen Elektromotoren in das Kraftfahrzeug eingebaut sind.

Die Baueinheit gestaltet sich konstruktiv besonders günstig und kompakt, wenn die Elektromotoren Außenrotormotoren sind.

Die erfindungsgemäß ausgebildeten Elektromotoren lassen sich besonders gut regelbar, wenig störungsanfällig und mit hoher Drehmomentdichte ausführen.

Die Erfindung und Ausgestaltungen der Erfindung werden im folgenden anhand von zwei schematisiert dargestellten Ausführungsbeispielen noch näher erläutert. Es zeigen:
- Fig. 1: eine Gesamt-Baueinheit aus zwei Elektromotoren und zwei Getrieben im Schnitt;
- Fig. 2: eine Motoren-Baueinheit aus zwei Elektromotoren im Schnitt.

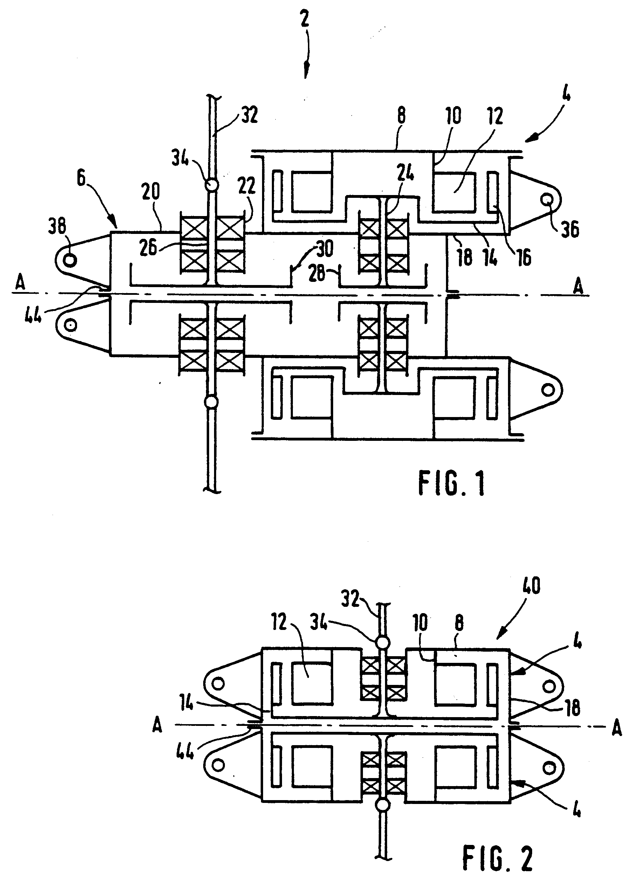

Die Baueinheit 2 gemäß Fig. 1 ist zu der Ebene A-A symmetrisch, so daß nur eine Hälfte beschrieben werden muß. Man erkennt bei jeder Teil-Baueinheit einen Elektromotor 4 und ein Getriebe 6. Der Elektromotor 4 ist im wesentlichen zylindrisch mit im Vergleich zum Durchmesser deutlich geringerer, axialer Dicke. Außenseitig der Baueinheit 2 weist der Elektromotor eine runde Grundplatte 8 auf, von der ein hohlzylindrischer Fortsatz 10 axial zum Motorinneren ragt. Am Außenumfang des Fortsatzes 10 sind insgesamt im wesentlichen zylindrisch die Statorpole 12 befestigt. Der Rotor 14 des Elektromotors 4 ist im wesentlichen zylindrisch-topfförmig und umgreift mit seiner Umfangswand die Statorpole 12 außen. Innen an der Umfangswand sind ringförmig Dauermagnete 16 in abwechselnder Polung befestigt. Die Stirnwand des Rotors 14 liegt auf der der Grundplatte 8 entgegengesetzten Seite des Elektromotors 4 und ist in einem zentralen Bereich in den Innenraum innerhalb der Statoren 12 hinein zurückgesetzt. Der Rotor 14 ist von einem topfförmigen Gehäuse 18 umschlossen, das mit der Grundplatte 8 verbunden ist.

An der der Grundplatte 8 entgegengesetzten Axialseite des Elektromotors 4 schließt sich das Getriebe 6 an. Das Getriebe 6 hat insgesamt eine "scheibenartige" Gestalt mit zwei parallelen Begrenzungswänden quer zu der Erstreckung der Wellen des Getriebes. Die dem Elektromotor zugewandte Begrenzungswand des Getriebsgehäuses 20 ist an den Durchführungsstellen der Getriebewellen jeweils mit einem hohlzylindrischen Stutzen 22 versehen, der sich ein kürzeres Stück aus dem Getriebe 6 heraus erstreckt und ein längeres Stück in das Getriebe hinein erstreckt. In diesen Stutzen 22 sind eine Eingangswelle 24 und eine Ausgangswelle 26 des Getriebes gelagert. Jeweils am inneren Ende trägt sowohl die Eingangswelle 24 als auch die Ausgangswelle 26 jeweils ein Zahnrad 28 bzw. 30, wobei das Zahnrad 30 auf der Ausgangswelle 26 einen größeren Durchmesser hat. Dabei kann es sich entweder um herkömmliche, miteinander kämmende Stirnräder handeln oder, wie gezeichnet, um Zahnräder, die mit einer um die beiden Zahnräder 28, 30 herumgelegten, nicht gezeichneten Zahnkette ein Getriebe bilden. Die Eingangswelle des Getriebes 6 ist zum Elektromotor 4 hin aus dem Getriebegehäuse herausgeführt, und dort ist der zentrale, zurückgesetzte Bereich des Rotors 14 befestigt, so daß sich eine fliegende Lagerung des Rotors 14 auf der Eingangswelle 24 des Getriebes 6 ergibt. Im Überlappungsbereich des Elektromotors 4 und des Getriebes 6 fallen die Gehäuse dieser beiden Bauteile zusammen.

Auf der dem Elektromotor 4 abgewandten Seite des Getriebes 6 ist dessen Getriebgehäuse 20 offen. Dort ist die ganz entsprechend ausgebildete, zweite Teil-Baueinheit mittels einer Flanschverbindung befestigt.

In dem Bereich, wo das Getriebe über das zylindrische Gehäuse 18 des Elektromotors 4 vorragt, ist ein Winkelraum gebildet, in dem eine Gelenkwelle 32, die zu einem anzutreibenden Kraftfahrzeugrad führt, mittels eines Gelenks 34 an die Ausgangswelle 26 angeschlossen ist. Dies gilt für beide Teil-Baueinheiten.

An der in Fig. 1 rechten Seite des Motorgehäuses 18 ist ein Befestigungsauge 36 vorgesehen. An der in Fig.1 linken Seite des Getriebegehäuses 20 ist ebenfalls ein Befestigungsauge 38 vorgesehen. Somit ergeben sich zwei Befestigungsaugen 36, 38 mit optimal großem Abstand. Insgesamt hat somit die Gesamt-Baueinheit 2 vier Befestigungsaugen.

Die Baueinheit 2 ist insgesamt so im Fahrzeug befestigt, daß die Achsen des Rotors 14, der Eingangswelle 24 und der Ausgangswelle 26 quer zur Fahrtrichtung des Kraftfahrzeugs liegen. Da die beiden Getriebe 6 in Axialrichtung nur wenig Raum beanspruchen, ergeben sich zwei Gelenkwellen 32 jeweils mit erwünscht großer Länge.

Wenn man die beiden Getriebe 6 an der Flanschverbindung trennt und die beiden dann offenen Getriebeseiten mit Deckeln verschließt, kann man auch jede Teil-Baueinheit räumlich getrennt für sich in das Kraftfahrzeug einbauen. Ein typisches Beispiel hierfür ist ein Kraftfahrzeug mit Frontantrieb, bei dem man die beiden Teil-Baueinheiten axial soweit auseinander rückt, daß ein vorn im Kraftfahrzeug angeordneter Verbrennungsmotor dazwischen Platz hat. Der Verbrennungsmotor dient dem Antrieb eines angeschlossenen Generators, der den für die Elektromotoren 4 erforderlichen Strom im Kraftfahrzeug erzeugt.

Es ist ferner hervorzuheben, daß das Innere des jeweiligen Elektromotors 4 durch Lösen der Grundplatte 8, die ja auf der dem zugeordneten Getriebe 6 entgegengesetzten Axialseite liegt, bequem zugänglich ist, beispielsweise für Wartungs- oder Reparaturarbeiten.

Die Fig. 2 zeigt eine Motoren-Baueinheit 40 aus zwei Elektromotoren 4, die ähnlich wie die Elektromotoren 4 des Ausführungsbeispiels von Fig. 1 aufgebaut sind, so daß hier nur Unterschiede beschrieben werden müssen. Die Motoren-Baueinheit 40 ist wiederum symmetrisch zur Ebene A-A, so daß nur ein Elektromotor 4 beschrieben werden muß.

Der hohlzylindrische Fortsatz 10 der Grundplatte 8 dient bei dieser Ausführungsform außerdem der Lagerung der Welle 42 des Rotors 14, wobei die Welle 42 von der Basiswand des Rotors 14 axial durch den Motor 4 hindurch zur anderen Seite führt. Dort ist wiederum ein Gelenk 34 zum Anschluß einer Gelenkwelle 32 vorgesehen. Das Gehäuse 18 jedes Elektromotors 4 ist auf der Axialseite, wo die beiden Motoren 4 durch eine Flanschverbindung 44 miteinander verbunden sind, offen, ohne daß die beiden Rotoren eine mechanische Verbindung miteinander hätten. Die Flanschverbindung 44 kann gelöst werden, und nach Verschließen des jeweiligen Elektromotors 4 an der dortigen Axialseite mit einem Deckel können beide Elektromotoren 4 räumlich getrennt voneinander eingebaut werden, wie bereits im Zusammenhang mit der Ausführungsform von Fig. 1 geschildert.

## Patentansprüche

1. Kraftfahrzeug-Elektroantrieb, mit einer Motoren-Baueinheit (40), die zwei in Axialrichtung benachbarte, in der Motoren-Baueinheit (40) vereinigte Elektromotoren (4) aufweist,
**dadurch gekennzeichnet,**
daß die Elektromotoren (4) elektronisch kommutierte Außenrotormotoren mit Dauermagneten (16) am Rotor (14) sind, wobei an jedem Rotor (14) eine Kraftfahrzeugantriebswelle (32) angeschlossen ist und daß jeder Elektromotor (4) eine im Vergleich zu seinem Durchmesser geringere, axiale Dicke aufweist.

2. Kraftfahrzeug-Elektroantrieb nach Anspruch 1,
dadurch gekennzeichnet,
daß an den Rotor (14) jedes Elektromotors (4) eine Kraftfahrzeugrad-Antriebswelle (32) angeschlossen ist.

3. Kraftfahrzeug-Elektroantrieb nach Anspruch 1 oder 2,
dadurch gekennzeichnet,
daß sich bei jedem Elektromotor (4) die Stirnwand des Außenrotors (14) an derjenigen Axialseite des Elektromotors (4) befindet, an der die Antriebswelle (32) von dem Elektromotor (4) wegführt.

4. Kraftfahrzeug-Elektroantrieb nach einem der Ansprüche 1 bis 3,
dadurch gekennzeichnet,
daß jeder Elektromotor (4) in Synchronbauart ausgeführt ist.

5. Kraftfahrzeug-Elektroantrieb nach einem der Ansprüche 1 bis 4,
dadurch gekennzeichnet,
daß die Motoren-Baueinheit (40) symmetrisch zu ihrer quer zu der Axialrichtung verlaufenden Mittelebene (A-A) aufgebaut ist.

6. Kraftfahrzeug-Elektroantrieb nach einem der Ansprüche 1 bis 5,
dadurch gekennzeichnet, daß eine Baueinheit (2) aus den Elektromotoren (4) und zwei dazwischengesetzten Getrieben (6) vorgesehen ist.

## Claims

1. An electric drive for motor vehicles, comprising a constructional motor unit (40) having two electric motors (4) adjacent each other in axial direction and united in said constructional motor unit (40),
characterized in
that the electric motors (4) are electronically commutated external rotor motors having permanent magnets (16) on the rotor (14), with each rotor (14) having a motor vehicle drive shaft (32) connected thereto,
and in that each electric motor (4), as compared to its diameter, is of smaller axial thickness.

2. An electric drive for motor vehicles according to claim 1,
characterized in
that the rotor (14) of each electric motor (4) has a motor vehicle wheel drive shaft (32) connected thereto.

3. An electric drive for motor vehicles according to claim 1 or 2,
characterized in
that in each electric motor (4) the face wall of the external rotor (14) is located on that axial side of the electric motor (4) on which the drive shaft (32) extends away from the electric motor (4).

4. An electric drive for motor vehicles according to any one of claims 1 to 3,
characterized in
that each electric motor (4) is designed in synchronous type of construction.

5. An electric drive for motor vehicles according to any one of claims 1 to 4,
characterized in
that the constructional motor unit (40) is composed symmetrically with respect to its central plane (A-A) extending transversely of the axial direction.

6. An electric drive for motor vehicles according to any one of claims 1 to 5,
characterized in
that there is provided a constructional unit (2) of the electric motors (4) and two transmissions (6) connected therebetween.

## Revendications

1. Entraînement électrique pour véhicule automobile comprenant une unité modulaire de moteurs (40) qui présente deux moteurs électriques (4) voisins dans la direction axiale, réunis dans l'unité modulaire de moteurs (40),
caractérisé en ce que
les moteurs électriques (4) sont des moteurs à commutation électronique à rotors extérieurs à aimants permanents (16) sur le rotor (14), un arbre de transmission de véhicule automobile (32) étant raccordé à chaque rotor (14), et en ce que chaque moteur électrique (4) présente une épaisseur axiale plus faible par rapport à son diamètre.

2. Entraînement électrique pour véhicule automobile selon la revendication 1,
caractérisé en ce que
un arbre de transmission de roue de véhicule automobile (32) est raccordé au rotor (14) de chaque moteur électrique (4).

3. Entraînement électrique pour véhicule automobile selon la revendication 1 ou 2,
caractérisé en ce que
dans chaque moteur électrique (4) la paroi frontale du rotor extérieur (14) se trouve du côté axial du moteur électrique (4) d'où l'arbre de transmission (32) part du moteur électrique (4).

4. Entraînement électrique pour véhicule automobile selon l'une quelconque des revendications 1 à 3,
caractérisé en ce que
chaque moteur électrique (4) est un moteur de type synchrone.

5. Entraînement électrique pour véhicule automobile selon l'une quelconque des revendications 1 à 4,
caractérisé en ce que
l'unité modulaire de moteurs (40) est constituée symétriquement par rapport à son plan médian (A-A) s'étendant transversalement par rapport à la direction axiale.

6. Entraînement électrique pour véhicule automobile selon l'une quelconque des revendications 1 à 5,
caractérisé en ce que
une unité (2) est composée des moteurs électriques (4) et de deux transmissions intermédiaires (6).
